# EUROPÄISCHE PATENTANMELDUNG

(11) **EP 4 471 165 A1**
(43) Veröffentlichungstag der Anmeldung: **04.12.2024**
(21) Anmeldenummer: 24173712.1
(22) Anmeldetag: 02.05.2024
(51) Int. Cl.: C22B 1/00, C22B 7/00, H01M 10/54, H01M 4/04, H01M 4/66, H01M 4/75

(54) **VERFAHREN ZUR VERWERTUNG VON ABFALL AUS DER HERSTELLUNG VON LITHIUM-IONEN-AKKUMULATOREN**

(30) Priorität: 02.06.2023 DE 102023205153
(71) Anmelder: VOLKSWAGEN AG, 38440 Wolfsburg (DE)
(72) Erfinder: Ambrock, Karina, 38165 Lehre (DE); Kunze, Miriam, 30926 Seelze (DE); Teichert, Philipp, 38165 Lehre (DE); Hüsker, Jessica Maria, 38126 Braunschweig (DE)

(57) **Zusammenfassung**

Die Erfindung betrifft ein Verfahren ein Verfahren zur Verwertung von Abfall, der bei der Herstellung von Elektroden für Lithium-Ionen-Akkumulatoren anfällt, wobei bei der Herstellung Materialbänder gefertigt werden, wobei jedes Materialband eine Folie aus einem metallischen Werkstoff 4 aufweist, die mit einem Elektrodenaktivmaterial 6 beschichtet ist, wobei bei der Herstellung Stücke 2 der Materialbänder als Abfall anfallen und zur Verwertung gesondert gesammelt werden, wobei jedes Stück 2 ein Folienstück aufweist, auf dem Elektrodenaktivmaterial 6 aufgebracht ist und wobei zur Verwertung die Stücke 2 einer thermischen Behandlung unterzogen werden zum Ablösen des Elektrodenaktivmaterials 6 von den Folienabschnitten.

## Beschreibung

Die Erfindung betrifft ein Verfahren zur Verwertung von Abfall, der bei der Herstellung von Elektroden für Lithium-Ionen-Akkumulatoren anfällt.

Lithium-Ionen-Akkumulatoren sind aktuell weit verbreitet. Sie kommen unter anderem in Kraftfahrzeugen zum Einsatz und werden hier zum Beispiel als sogenannte Antriebsbatterien genutzt, also als Energiespeicher zur Versorgung elektrischer Antriebsmaschinen.

Ein Lithium-Ionen-Akkumulator weist dabei je nach Anwendungsfall eine oder mehrere Akkumulatorzellen auf und jede Akkumulatorzelle weist üblicherweise als wesentliche Komponenten eine positive Elektrode, eine negative Elektrode, einen Separator und ein Elektrolyt auf. Hinsichtlich des genauen Aufbaus sind hierbei eine Vielzahl von Ausführungen bekannt.

Die Herstellung von Lithium-Ionen-Akkumulatoren ist zum Beispiel in "Heimes, Heiner Hans; Kampker, Achim; Lienemann, Christoph; Locke, Marc; Offermanns, Christian; Michaelis, Sarah; Rahimzei, Ehsan (2018): Produktionsprozess einer Lithium-Ionen-Batteriezelle, Frankfurt am Main, PEM der RWTH Aachen und VDMA Eigendruck" skizziert.

Der Erfindung liegt die Aufgabe zugrunde, ein Verfahren zur Verwertung von Abfall aus der Herstellung von Lithium-Ionen-Akkumulatoren anzugeben.

Diese Aufgabe wird durch ein Verfahren mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Das erfindungsgemäße Verfahren dient dabei zur Verwertung von Abfall, der bei der Herstellung von Elektroden für Lithium-Ionen-Akkumulatoren anfällt. Es handelt sich bei dem Verfahren daher um ein Verwertungs-Verfahren.

Verfahren zur Herstellung von Elektroden für Lithium-Ionen-Akkumulatoren, also Herstellungs-Verfahren, sind hierbei prinzipiell bekannt. Dabei erfolgt zunächst die Fertigung von Materialbändern und nachfolgend werden dann durch Trennvorgänge, auch Slitten genannt, aus diesen Materialbändern Elektroden herausgetrennt. Ein solches Herstellungs-Verfahren ist in "Heimes, Heiner Hans; Kampker, Achim; Lienemann, Christoph; Locke, Marc; Offermanns, Christian; Michaelis, Sarah; Rahimzei, Ehsan (2018): Produktionsprozess einer Lithium-Ionen-Batteriezelle, Frankfurt am Main, PEM der RWTH Aachen und VDMA Eigendruck" skizziert.

Bei der Herstellung der Elektroden fällt auch Abfall an, der Stücke der Materialbänder umfasst, nämlich Abfall-Stücke. Bei einem entsprechenden Materialband handelt es sich um ein Bandmaterial, welches eine Folie aus einem metallischen Werkstoff aufweist, also beispielsweise eine Kupferfolie oder eine Aluminiumfolie. Die Folie ist dabei auf zumindest einer Seite mit einem Aktivmaterial beschichtet, nämlich einem sogenannten Elektrodenaktivmaterial. Jedes der zuvor genannten Abfall-Stücke weist dann ein Folienstück auf, auf dem Elektrodenaktivmaterial aufgebracht ist.

Diese Abfall-Stücke oder kurz Stücke werden im Zuge des Verwertungs-Verfahrens gesondert gesammelt. D. h., dass die Stücke getrennt von anderem Abfall gesammelt werden, so dass der Abfall dann quasi als sortenreiner Abfall vorliegt. Der Abfall wird somit im Sinne dieser Anmeldung gebildet durch die Stücke sowie gegebenenfalls durch Folienstücke ohne Elektrodenaktivmaterial und/oder Elektrodenaktivmaterial ohne Folienstücke.

Der so gesammelte Abfall wird schließlich im Zuge des Verwertungs-Verfahrens einer thermischen Behandlung unterzogen, mittels derer bei den Abfall-Stücken das Elektrodenaktivmaterial von den Folienstücken abgelöst wird.

Bei den zuvor genannten Stücken, also den Abfall-Stücken, die bei der Herstellung der Elektroden als Abfall anfallen, lassen sich typischerweise drei Typen unterscheiden, nämlich ein Band-Typ, ein Abschnitt-Typ und ein Verschnitt-Typ. Je nach Anwendungsfall wird das Verwertungsverfahren auf Abfall-Stücke nur eines Typs angewendet, auf Abfall-Stücke zweier Typen, insbesondere des Band-Typs und des Abschnitt-Typs, oder auf Abfall-Stücke aller drei Typen.

Wird das Verwertungsverfahren auf Abfall-Stücke zumindest zweier Typen angewendet, so erfolgt gemäß zumindest einer Ausführung des Verfahrens weiter das Sammeln und das thermische Behandeln der Stücke getrennt nach Typ. Bevorzugt ist dabei insbesondere eine Variante, bei der Abfall-Stücke des Verschnitt-Typs getrennt von den übrigen Abfall-Stücken gesammelt und thermisch behandelt werden.

Bei einem Stück des Band-Typs handelt es sich dabei um ein ganzes Stück Materialband, also ein komplettes Materialband, welches beispielsweise aussortiert wurde, weil die Beschichtung aus Elektrodenaktivmaterial nicht den Qualitäts-Vorgaben entspricht. Ein solches Stück weist typischerweise eine Länge von mehr als 100 m auf und insbesondere von mehr als 1000 m.

Bei einem Stück des Abschnitt-Typs handelt es sich zum Beispiel um einen Abschnitt eines Materialbands, welcher beispielsweise aus dem Materialband herausgetrennt wurde, weil die Beschichtung aus Elektrodenaktivmaterial in diesem Abschnitt nicht den Qualitäts-Vorgaben entspricht oder weil die Folie gerissen ist. Zum Abschnitt-Typ werden zudem typischerweise auch Abschnitte eines Materialbandes gezählt, die als sogenanntes Anfahr- oder Abfahrmaterial bezeichnet werden. Ein solches Stück weist typischerweise eine Länge von mehr als 5 m auf und insbesondere von mehr als 20 m.

Bei einem Stück des Verschnitt-Typs handelt es sich um ein Stück Materialband, das als Verschnitt übrig bleibt bei einem der zuvor genannten Trennvorgänge, also dem Slitten.

Unabhängig davon welcher Typ Abfall-Stücke mittels des Verwertungs-Verfahrens verwertet wird oder welche Typen Abfall-Stücke mittels des Verwertungs-Verfahrens verwertet werden, erfolgt im Zuge der Ausführung des Verwertungs-Verfahrens eine thermischen Behandlung, mittels derer bei den Abfall-Stücken das Elektrodenaktivmaterial von den Folienstücken abgelöst wird. Dies wurde bereits zuvor dargelegt.

Bevorzugt erfolgt dabei die Anwendung des Verwertungs-Verfahrens auf Abfall-Stücke, bei denen das metallische Material der Folienstücke und das Elektrodenaktivmaterial unterschiedliche Wärmeausdehnungseigenschaften aufweisen, insbesondere unterschiedliche Längenausdehnungskoeffizienten. In diesem Fall werden dann die unterschiedlichen Wärmeausdehnungseigenschaften, also insbesondere die unterschiedlichen Längenausdehnungskoeffizienten ausgenutzt, um das Elektrodenaktivmaterial von den Folienstücken abzulösen.

Weiter bevorzugt erfolgt die Anwendung des Verwertungs-Verfahrens auf Abfall-Stücke, bei denen das metallische Material der Folienstücke einen Längenausdehnungskoeffizienten α₁ und das Elektrodenaktivmaterial einen Längenausdehnungskoeffizienten α₂ aufweist und bei denen zumindest bei Raumtemperatur gilt α₁=f*a2 oder α₂=f*α₁, wobei der Faktor f größer gleich 1,2 ist und insbesondere größer gleich 1,5.

In einigen Fällen erfolgt weiter eine thermischen Behandlung der Abfall-Stücke derart, dass diese ausgehend von einer Raumtemperatur auf eine Wärmebehandlungstemperatur T_{W} aufgeheizt werden. Zum Aufheizen wird dabei bevorzugt Abwärme genutzt, die bei der Herstellung der Elektroden generiert wird, also im Zuge des Herstellungs-Verfahrens. Die Wärmebehandlungstemperatur Tw liegt unabhängig davon typischerweise im Bereich 100°C bis 300°C und insbesondere im Bereich 200°C bis 300°C.

Außerdem ist es in einigen Fällen zweckdienlich, wenn die thermische Behandlung unter speziellen Umgebungsbedingungen durchgeführt wird und die Abfall-Stücke in diesen Fällen nicht der Umgebungsluft ausgesetzt sind. Stattdessen erfolgt die thermische Behandlung dann beispielsweise unter einer Schutzgasatmosphäre oder unter Vakuumbedingungen.

Je nach Anwendungsfall werden die Abfall-Stücke weiter ausgehend von einer Raumtemperatur auf die Wärmebehandlungstemperatur Tw aufgeheizt und über einen Zeitraum t auf der Wärmebehandlungstemperatur Tw gehalten, beispielsweise über einen Zeitraum t größer gleich 2 min, größer gleich 5 min, größer gleich 10 min oder über einen Zeitraum t größer gleich 20 min.

Das Aufheizen auf die Wärmebehandlungstemperatur T_{W} erfolgt gemäß zumindest einer Ausführungsvariante mit einer Heizrate kleiner gleich 1°C/s oder kleiner gleich 0,5°C/s.

Einer alternativen Ausführungsvariante entsprechend erfolgt die thermischen Behandlung, indem bei einer Raumtemperatur flüssiger Stickstoff auf die Abfall-Stücke aufgebracht wird.

Von Vorteil ist es weiter, wenn im Zuge der Ausführung des Verwertungs-Verfahrens das Elektrodenaktivmaterial mittels zumindest einer Gasströmung, also beispielsweise einen Luftstrahl, von den Folienabschnitten getrennt wird.

Zweckdienlich ist außerdem eine Ausführung des Verwertungs-Verfahrens, bei der das Elektrodenaktivmaterial von den Folienabschnitten getrennt wird, indem dieses abgebürstet oder abgepinselt wird.

Insbesondere wenn das Verwertungs-Verfahren auf Abfall-Stücke des Band-Typs und/oder des Abschnitt-Typs angewendet wird, ist es darüber hinaus von Vorteil, wenn die thermische Behandlung eines jeden Abfall-Stückes in einen Rolle-zu-Rolle-Prozess erfolgt, für den das entsprechende Abfall-Stück dann zuvor eingespannt wird.

In vorteilhafter Weiterbildung wird auf diese Weise dann eine Folie aus dem metallischen Material zurückgewonnen, also eine unbeschichtete Folie, die bevorzugt in der Folge wieder zur Herstellung von Elektroden genutzt wird, in dem diese erneut mit Elektrodenaktivmaterial beschichtet wird.

Wird das Verwertungs-Verfahren auf Abfall-Stücke des Verschnitt-Typs angewendet wird, so ist eine Variante zweckdienlich, bei der die Abfall-Stücke vor der thermischen Behandlung zerkleinert werden, insbesondere geschreddert. Auch in diesem Fall ist es darüber hinaus von Vorteil, wenn im Zuge der weiteren Ausführung des Verwertungs-Verfahrens das Elektrodenaktivmaterial mittels zumindest einer Gasströmung, also beispielsweise einen Luftstrahl, von den Folienabschnitten getrennt wird.

Davon unabhängig wird das abgelöste und abgetrennte Elektrodenaktivmaterial in zumindest einigen Anwendungsfällen in einem weiteren Schritt des Verwertungs-Verfahrens vermahlen. Typischerweise wird das Elektrodenaktivmaterial dabei mit einem Lösungsmittel vermengt und in dem Lösungsmittel vermahlen.

In vorteilhafter Weiterbildung wird das vermahlene Elektrodenaktivmaterial in einem weiteren Schritt des Verwertungs-Verfahrens als Komponente für eine Elektrodenaktivmaterial-Suspension verwendet. Diese Elektrodenaktivmaterial-Suspension wird dann wiederum genutzt zur Herstellung von Elektroden.

Die durch die thermische Behandlung der Abfall-Stücke vom Elektrodenaktivmaterial befreiten Folienstücke werden zweckdienlicherweise ebenfalls weiterverwertet. Dabei werden die Folienstücke des Band-Typs bevorzugt wieder einem Beschichtungsprozess zugeführt. Diese gilt weiter bevorzugt auch für die Folienstücke des Abschnitt-Typs, wobei diese typischerweise zuvor in einem Zwischenverarbeitungsprozess zu größeren Stücken zusammengefügt werden, beispielsweise mittels einer sogenannten Splice-Technik. Folienstücke des Verschnitt-Typ und Folienstücke der anderen Typen, die nicht direkt wiederverwendet werden können, werden typischerweise einer Metallverwertung zugeführt.

Weitere Vorteile, Merkmale und Einzelheiten der Erfindung ergeben sich aus den Ansprüchen, der nachfolgenden Beschreibung bevorzugter Ausführungsformen sowie anhand der schematischen Zeichnungen. Darin zeigen:
- Fig. 1: in einer Seitenansicht eine erste Station zur Verwertung von Abfall, der bei der Herstellung von Elektroden für Lithium-Ionen-Akkumulatoren anfällt, und
- Fig. 2: in einer Seitenansicht eine zweite Station zur Verwertung von Abfall, der bei der Herstellung von Elektroden für Lithium-Ionen-Akkumulatoren anfällt.

Einander entsprechende Teile sind in allen Figuren mit den gleichen Bezugszeichen versehen.

Ein nachfolgend exemplarisch beschriebenes Verfahren dient zur Verwertung von Abfall, der bei der Herstellung von Elektroden für Lithium-Ionen-Akkumulatoren anfällt. Dieser Abfall umfasst Stücke 2 von Materialbändern, nämlich Abfall-Stücke.

Bei einem entsprechenden Materialband handelt es sich um ein Bandmaterial, welches eine Folie aus einem metallischen Werkstoff 4 aufweist, also beispielsweise eine Kupferfolie oder eine Aluminiumfolie. Die Folie ist dabei auf zumindest einer Seite mit einem Aktivmaterial beschichtet, nämlich einem sogenannten Elektrodenaktivmaterial 6. Jedes der zuvor genannten Abfall-Stücke oder kurz Stücke 2 weist dann ein Folienstück auf, auf dem Elektrodenaktivmaterial 6 aufgebracht ist.

Die Stücke werden nun im Zuge des Verfahrens gesondert gesammelt. D. h., dass die Stücke 2 getrennt von anderem Abfall gesammelt werden, so dass der Abfall dann quasi als sortenreiner Abfall vorliegt. Der so gesammelte Abfall wird dann einer thermischen Behandlung unterzogen, mittels derer bei den Stücken 2 das Elektrodenaktivmaterial 6 vom metallischen Werkstoff 4 abgelöst wird.

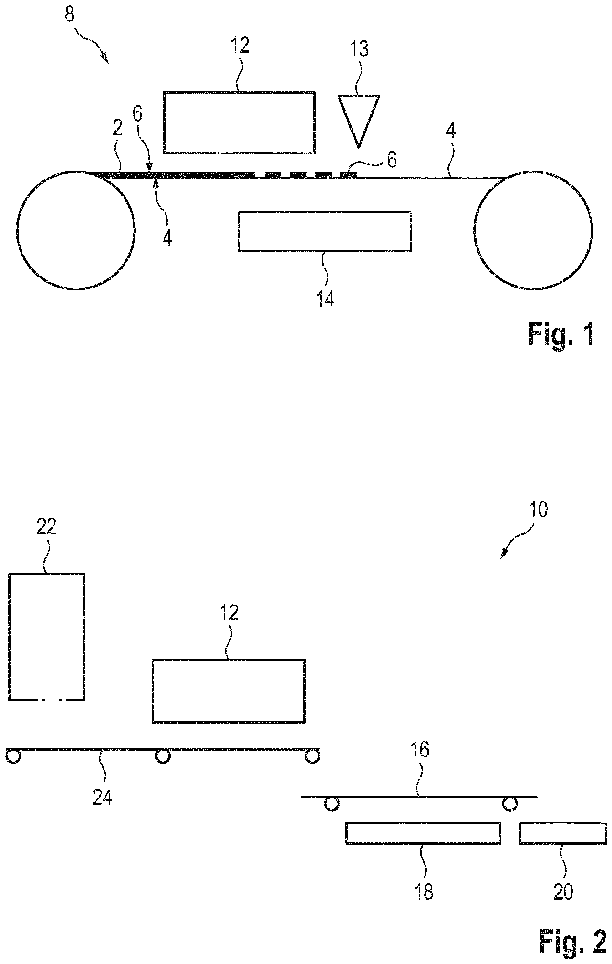

Bei den Stücken 2 lassen sich im Ausführungsbeispiel drei Typen unterscheiden, nämlich ein Band-Typ, ein Abschnitt-Typ und ein Verschnitt-Typ. Die Stücke 2 des Band-Typs und des Abschnitt-Typ werden gesammelt und für die thermische Behandlung einer ersten Station 8 zugeführt, welche in Fig. 1 angedeutet ist. Die Stücke 2 des Verschnitt-Typs werden getrennt von den übrigen Stücken 2 gesammelt und für die thermische Behandlung einer zweiten Station 10 zugeführt, welche in Fig. 2 skizziert ist.

Bei einem Stück 2 des Band-Typs handelt es sich um ein ganzes Stück 2 Materialband, also ein komplettes Materialband, welches beispielsweise aussortiert wurde, weil die Beschichtung aus Elektrodenaktivmaterial 6 nicht den Qualitäts-Vorgaben entspricht. Ein solches Stück 2 weist typischerweise eine Länge von mehr als 100 m auf und insbesondere von mehr als 1000 m.

Bei einem Stück 2 des Abschnitt-Typs handelt es sich zum Beispiel um einen Abschnitt eines Materialbands, welcher beispielsweise aus dem Materialband herausgetrennt wurde, weil die Beschichtung aus Elektrodenaktivmaterial 6 in diesem Abschnitt nicht den Qualitäts-Vorgaben entspricht oder weil die Folie gerissen ist. Zum Abschnitt-Typ werden zudem typischerweise auch Abschnitte eines Materialbandes gezählt, die als sogenanntes Anfahr- oder Abfahrmaterial bezeichnet werden. Ein solches Stück 2 weist typischerweise eine Länge von mehr als 5 m auf und insbesondere von mehr als 20 m.

Bei einem Stück 2 des Verschnitt-Typs handelt es sich um ein Stück 2 Materialband, das als Verschnitt übrig bleibt.

Wie zuvor bereits angedeutet werden alle Stücke 2 im Zuge der Ausführung des Verfahrens thermisch behandelt. Die thermische Behandlung dient dabei dazu, das Elektrodenaktivmaterial 6 vom metallischen Werkstoff 4 abzulösen. Hierbei werden die unterschiedlichen Längenausdehnungskoeffizienten von Elektrodenaktivmaterial 6 und metallischem Werkstoff 4 ausgenutzt.

Im Ausführungsbeispiel erfolgt die thermischen Behandlung der Stücke 2 derart, dass diese ausgehend von einer Raumtemperatur auf eine Wärmebehandlungstemperatur T_{W} aufgeheizt werden. Hierzu weist jede der Stationen 8,10 eine Heizeinheit 12 auf. Die Wärmebehandlungstemperatur T_{W} liegt hierbei typischerweise im Bereich 100°C bis 300°C und insbesondere im Bereich 200°C bis 300°C.

Nach dem Ablösen erfolgt dann weiter das Trennen von Elektrodenaktivmaterial 6 und metallischem Werkstoff 4. Im Falle der ersten Station 8 wird hierzu eine Gasströmung genutzt, also beispielsweise einen Luftstrahl. Die erste Station 8 weist daher ein Gebläse 13 auf, mit dem das Elektrodenaktivmaterial 6 in einen Auffangbehälter 14 befördert wird.

Im Falle der zweiten Station 10 wird dagegen zur Trennung eine Rüttel-Einheit 16 genutzt, die eine Kombination aus Rüttelsieb und Förderband ist. Dabei landet dann das Elektrodenaktivmaterial 6 in einem ersten Auffangbehälter 18 und der metallische Werkstoff 4 in einem zweiten Auffangbehälter 20.

Weiter erfolgt die thermische Behandlung der Stücke 2 des Band-Typs und des Abschnitt-Typs in einen Rolle-zu-Rolle-Prozess, für den jedes der entsprechenden Stücke zuvor eingespannt wird. Dies ist in Fig. 1 angedeutet. Auf diese Weise wird dann eine Folie aus dem metallischen Material 4 zurückgewonnen, also eine unbeschichtete Folie, die bevorzugt in der Folge wieder zur Herstellung von Elektroden genutzt wird, in dem diese erneut mit Elektrodenaktivmaterial 6 beschichtet wird.

Die thermische Behandlung der Stücke 2 des Verschnitt-Typs erfolgt nicht in einen Rolle-zu-Rolle-Prozess. Stattdessen werden hier die Stücke 2 vor der thermischen Behandlung zerkleinert. Hierzu weist die zweite Station 10 einen Schredder 18 auf. Der im Schredder 18 zerkleinerte Abfall fällt dann auf ein Förderband 20 und wird auf dem Förderband 20 aufliegend mittels der Heizeinheit 12 thermisch behandelt bevor dieser auf die Rüttel-Einheit 16 fällt.

### Bezugszeichenliste

- 2: Stück
- 4: metallischer Werkstoff
- 6: Elektrodenaktivmaterial
- 8: erste Station
- 10: zweite Station
- 12: Heizeinheit
- 13: Gebläse
- 14: Auffangbehälter
- 16: Rüttel-Einheit
- 18: erster Auffangbehälter
- 20: zweiter Auffangbehälter
- 22: Schredder
- 24: Förderband

## Patentansprüche

1. Verfahren zur Verwertung von Abfall, der bei der Herstellung von Elektroden für Lithiumlonen-Akkumulatoren anfällt,
wobei
- bei der Herstellung Materialbänder gefertigt werden,
- jedes Materialband eine Folie aus einem metallischen Werkstoff 4 aufweist, die mit einem Elektrodenaktivmaterial 6 beschichtet ist,
- bei der Herstellung Stücke 2 der Materialbänder als Abfall anfallen und zur Verwertung gesondert gesammelt werden,
- jedes Stück 2 ein Folienstück aufweist, auf dem Elektrodenaktivmaterial 6 aufgebracht ist und
- zur Verwertung die Stücke 2 einer thermischen Behandlung unterzogen werden zum Ablösen des Elektrodenaktivmaterials 6 von den Folienabschnitten.

2. Verfahren nach Anspruch 1,
wobei der metallische Werkstoff 4 und das Elektrodenmaterial 6 unterschiedliche Wärmeausdehnungseigenschaften aufweisen und wobei die thermische Behandlung derart erfolgt, dass die unterschiedlichen Wärmeausdehnungseigenschaften genutzt werden zum Ablösen.

3. Verfahren nach Anspruch 1 oder 2,
wobei die Stücke 2 im Zuge der thermischen Behandlung ausgehend von einer Raumtemperatur auf eine Wärmebehandlungstemperatur aufgeheizt werden.

4. Verfahren nach Anspruch 1 oder 2,
wobei zur thermischen Behandlung bei einer Raumtemperatur flüssiger Stickstoff auf die Stücke 2 aufgebracht wird.

5. Verfahren nach einem der Ansprüche 1 bis 4,
wobei zur Verwertung das Elektrodenaktivmaterial 6 mittels einer Gasströmung von den Folienstücken getrennt wird.

6. Verfahren nach einem der Ansprüche 1 bis 5,
wobei zur Verwertung das Elektrodenaktivmaterial 6 von den Folienstücken abgebürstet wird.

7. Verfahren nach einem der Ansprüche 1 bis 6,
wobei die thermische Behandlung in einen Rolle-zu-Rolle-Prozess erfolgt, für den die Stücke 2 eingespannt werden.

8. Verfahren nach einem der Ansprüche 1 bis 7,
wobei zur Verwertung das abgelöste Elektrodenaktivmaterial 6 vermahlen wird.

9. Verfahren nach einem der Ansprüche 1 bis 7,
wobei zur Verwertung das abgelöste Elektrodenaktivmaterial 6 in einem Lösungsmittel vermahlen wird.

10. Verfahren nach Anspruch 8 oder 9,
wobei zur Verwertung das vermahlene Elektrodenaktivmaterial 6 als Komponente für eine Elektrodenaktivmaterial-Suspension verwendet wird.
